# EUROPEAN PATENT SPECIFICATION

(11) **EP 3 703 513 B1**
(45) Date of publication and mention of the grant of the patent: **02.12.2026**
(21) Application number: 18804467.1
(22) Date of filing: 30.10.2018
(51) Int. Cl.: A23L 29/212, C08B 30/12, C08B 30/20

(54) **STARCH BLENDS**
STÄRKEMISCHUNGEN
MÉLANGES D'AMIDON

(30) Priority: 03.11.2017 US 201762581235 P
(43) Date of publication of application: 09.09.2020
(73) Proprietor: Corn Products Development Inc., Westchester, IL 60154 (US)
(72) Inventor: WOO, Kyungsoo, Bridgewater New Jersey 08807 (US); YANG, Xin, Bridgewater New Jersey 08807 (US); ROA, Brandon, Bridgewater New Jersey 08807 (US); YILDIZ, Erhan, Bridgewater New Jersey 08807 (US); MARTIN, Alicia, Bridgewater New Jersey 08807 (US)
(74) Representative: Novagraaf Group
(86) International application number: PCT/US2018/058296
(87) International publication number: WO 2019/089656

(56) References cited:
- EP-A1- 1 241 216
- EP-A1- 1 925 298
- EP-A1- 2 014 177
- EP-A1- 2 674 038
- US-A1- 2013 337 118
- US-B1- 6 277 186
- SANZ T ET AL: "Effect of thermally inhibited starches on the freezing and thermal stability of white sauces: Rheological and sensory properties", LWT- FOOD SCIENCE AND TECHNOLOGY, vol. 67, 2016, pages 82 - 88, XP029374477, ISSN: 0023-6438, DOI: 10.1016/J.LWT.2015.11.048

## Description

### CROSS-REFERENCE TO RELATED APPLICATIONS

The present technology is generally related to starches and starch blends. More specifically it is related to starch blends that improve the texture and stability of comestibles that incorporate the starch blend.

Starches are used in the food industry to add texture to food products. It is the viscosifying properties of starches that are known to improve the texture of food products. The currently available starches, and particularly the amylose-containing starches, however, tend to gel upon cooking and cooling. Further, sauces and gravies, soups, creamers, salad dressings, and other liquid compositions prepared with amylose-containing starches become unstable upon freezing and thawing. As a result, there remains a need in the food industry for a starch that does not gel upon cooking and cooling and/or that is stable upon freezing and thawing.

In one aspect, a starch blend is provided that includes an unmodified amylose-containing starch and a non-chemically inhibited starch.

Also disclosed herein are edible compositions comprising one or more starch blend described herein. Such starch blends address the gelling and/or stability problems associated with using the currently available starches.

These ranges may include 40-85% (w/w), 40-80% (w/w), 50-70% (w/w), 55-65% (w/w), or 50% (w/w) of the unmodified amylose-containing starch and 15-20% (w/w), 20-60% (w/w), 30-50% (w/w), 35-45% (w/w), or 50% (w/w) of the non-chemically inhibited starch. The unmodified amylose containing starch is a native amylose-containing starch that contains from about 10% to less than 50% amylose by weight of the starch (w/w) and the non-chemically inhibited starch is a thermally inhibited starch. In some embodiments, the starch blends described herein are clean label starch blends.

One or more starch blend described herein has, upon cooking in water, a high viscosity after one or more, two or more, three or more, four or more, or five or more freeze-thaw cycles. One or more starch blend described herein has, upon cooking in water, a high viscosity after three or more freeze-thaw cycles. One or more starch blend described herein is useful in a variety of food and beverage compositions, particularly frozen sauces and gravies.

EP1241216 discloses a thickening composition comprising a "co-processed" combination of modified starch and flour. The co-processed composition comprises a modified starch and a flour wherein the starch and flour are blended and co-processed to provide a thickener which provides a combination of good opacity, process tolerance, cold and hot temperature stability, emulsification and instant viscosity properties in foods.

### BRIEF DESCRIPTION OF THE DRAWINGS

FIG. 1A is graph of the viscosity changes as a function of shear rate for the pudding formulations according to Example 7.
FIG. 1B is a series of photographs of the various formulations illustrating the behavior of the starch blends, according to Example 7.
FIG. 2 illustrates yield stress determination from flow curves for the pudding formulations according to Examples 8 and 9.
FIG. 3 is a graph of the viscosity changes as a function of shear rate for the pudding formulations according to Example 8.
FIGs. 4A and 4B are graphs of the viscosity changes as a function of shear rate for the pudding formulations according to Example 9.

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s).

The following terms are defined for clarity. Terms not defined should be accorded their ordinary meaning as used in the art and commonly understood by one of ordinary skill in the art.

The singular terms "a", "an", and "the" include the plural reference unless the context clearly indicates otherwise.

The term "amylose-containing" refers to a starch with at least 10% to less than 50% amylose (w/w) based upon the starch.

The term "gelatinization" refers to the process by which starch is cooked out and loses its granular structure. During gelatinization starch loses its birefringent property as well as any Maltese cross present in its native state.

The term "granular" refers to the structure of starch in which the starch is not cold water soluble (still at least partly crystalline) and exhibits birefringence and typically a Maltese cross under polarized light.

The term "non-chemical inhibition", "non-chemically inhibited", or "non-chemically modified" refers to a starch that functions as a chemically inhibited starch without being chemically modified.

The term "highly inhibited" refers to a starch that is inhibited to such a degree that it swells to a limited extent and shows a continuing rise in viscosity without attaining a peak.

The term "moderately inhibited" refers to a starch that is inhibited to such a degree that it exhibits a lower peak viscosity and a lower percentage breakdown in viscosity compared to the same starch that is not inhibited.

The term "native" refers to an unmodified starch as extracted from a plant source such as cereals, tubers, roots, legumes and fruits.

The term "starch" refers to starch and flour.

The term "unmodified" refers to a native starch or a native starch that has been physically modified. The term "unmodified" excludes a starch or flour that has been chemically or enzymatically modified.

In one aspect, disclosed herein is a starch blend comprising 40-80% (w/w) of an unmodified amylose-containing starch and 20-60% (w/w) of a non-chemically inhibited starch. Some embodiments are directed to one or more starch blends described herein, with the proviso that the unmodified amylose-containing starch is not a starch that that has been chemically or enzymatically modified. Surprisingly, despite the high level of amylose-containing starch, the one or more starch blends described herein, upon cooking in water, retain a high viscosity after one or more, two or more, or three or more freeze-thaw cycles. In one embodiment, the starch blend described herein is used in a variety of food and beverage compositions. In another embodiment, the starch blend described herein is used in frozen sauces and gravies. In still another embodiment, the starch blend described herein is a clean label starch blend.

In one embodiment, the unmodified amylose-containing starch is obtained from any amylose-containing starch source. In another embodiment, the non-chemically inhibited starch is obtained from any starch source. In yet another embodiment, the amylose-containing starch and/or the non-chemically inhibited starch is/are obtained from a starch source found in nature. In still another embodiment, the amylose-containing starch and/or the non-chemically inhibited starch is/are obtained from a plant obtained by standard breeding techniques, such as, for example, crossbreeding, translocation, inversion, transformation, insertion, irradiation, chemical or other induced mutation, any other method of gene or chromosome engineering to include variations thereof, and combinations thereof. In still yet another embodiment, amylose-containing starch and/or the non-chemically inhibited starch is/are obtained from a plant grown from induced mutations, which may be produced by known standard methods of mutation breeding.

In another embodiment, the amylose-containing and/or non-chemically inhibited starch is selected from cereals, tubers, roots, legumes, and fruits. The starch can be any variety, including, for example, without limitation, corn, potato, sweet potato, barley, wheat, rice, sago, amaranth, tapioca (cassava), arrowroot, canna, pea, lentil, fava (faba) bean, banana, oat, rye, triticale, or sorghum. In another embodiment, the non-chemically inhibited starch is any variety including, for example, low amylose (waxy) varieties. An amylose-containing variety is a starch that contains at least 10% to less than 50% amylose, at least about 15% to less than 50% amylose, or at least about 20% to less than 50% amylose, all by weight of the starch (w/w). A high amylose variety is a starch that contains at least 50% amylose, at least about 70% amylose, at least about 80% amylose, or at least about 90% amylose, all by weight of the starch (w/w). A low amylose or waxy variety is a starch that contains less than 10% amylose, less than about 5%, less than about 2%, or less than about 1% amylose, all by weight of the starch (w/w).

In one embodiment, each starch component described herein is in an intact granule form (granular), *e.g.* not completely gelatinized.

The unmodified amylose-containing starch is a native amylose-containing starch that contains from about 10% to less than 50% amylose, at least about 15% to less than 50% amylose, or at least about 20% to less than 50% amylose, all by weight of the starch (w/w). In a yet further embodiment, the unmodified amylose-containing starch is a native amylose-containing starch that contains from about 10% to less than 50% amylose, at least about 15% to less than 50% amylose, or at least about 20% to less than 50% amylose, all by weight of the starch (w/w) and is selected from potato, rice, tapioca and corn. In another embodiment, the unmodified amylose-containing starch is a native amylose-containing potato starch that contains from about 10% to less than 50% amylose at least about 15% to less than 50% amylose, or at least about 20% to less than 50% amylose, all by weight of the starch (w/w).

The non-chemically inhibited starch is a thermally inhibited starch.

Thermal inhibition is known in the art as exemplified by, for example, US Patent Nos. 5,725,676; 5,932,017; 6,231,675; 6,451,121; 8,759,511; and 8,268,989. In one embodiment, the thermally inhibited starches prepared in accordance with a process comprising the steps of dehydrating the polysaccharide to anhydrous or substantially anhydrous (less than 1% moisture) and heating the anhydrous or substantially anhydrous starch until it functions similarly to a chemically modified or inhibited starch.

In another embodiment, the non-chemically inhibited starch s unmodified. In a further embodiment, the non-chemically inhibited starch is not further treated.

In yet a further embodiment, the non-chemically inhibited starch is a low amylose starch. In another embodiment, the non-chemically inhibited starch is a low amylose starch selected from waxy corn, waxy tapioca, waxy rice, and waxy potato. The non-chemically inhibited starch is a thermally inhibited starch. In yet a further embodiment, the degree to which the non-chemically inhibited starch is inhibited varies. For example, the degree of inhibition of the non-chemically inhibited starch is characterized by a variety of factors, such as, for example, the viscosity of a 5% dry solids starch slurry at a pH of 3 as it is heated to and then held at 95°C. In a still yet further embodiment, the non-chemically inhibited starch is highly inhibited. In an even further embodiment, the non-chemically inhibited starch is moderately inhibited.

In some embodiments, the non-chemically inhibited is a thermally inhibited waxy corn starch that is moderately inhibited. In still other embodiments, the non-chemically inhibited starch is a thermally inhibited waxy corn starch that is highly inhibited.

In a further embodiment, the unmodified amylose-containing starch; non-chemically inhibited starch; and/or one or more starch blend described herein is additionally processed, wherein said additional processing does not destroy the granular structure of said starch and said starch remains unmodified, e.g., said starch is not enzymatically or chemically modified. In some embodiments, the particle size of the unmodified amylose-containing starch; non-chemically inhibited starch; and/or one or more starch blends as described herein is adjusted by grinding, agglomerating, sieving, or combinations thereof.

In some embodiments, the unmodified amylose-containing starch; non-chemically inhibited starch; and/or the one or more starch blends described herein is used as-is or is first washed with excess water. In other embodiments, the unmodified amylose-containing starch; non-chemically inhibited starch; and/or the one or more starch blends described herein is purified by any method known in the art to remove off-flavors, odors, and/or colors that are native to the starch(es) or created during processing. Illustrative purification processes for treating starches are disclosed in, for example, EP554818. Exemplary alkali washing techniques are described in, for example, U.S. Patent Nos. 4,477,480 and 5,187,272. In one embodiment, the unmodified amylose-containing starch; non-chemically inhibited starch; and/or one or more starch blend described herein is purified by post-heat treatment. The pH may also be adjusted using methods known in the art. In another embodiment, the pH of the one or more starch blends described herein is adjusted to between 5.5 and 8.0.

The starch blend comprises 40-85% (w/w) of an unmodified amylose-containing starch and 15-60% (w/w) of a non-chemically inhibited starch. The starch blend may comprise from 40-80% (w/w) of an unmodified amylose-containing starch and 20-60% (w/w) of a non-chemically inhibited starch. In another embodiment, the starch blend comprises 50-70% (w/w) of an unmodified amylose-containing starch and 30-50% (w/w) of a non-chemically inhibited starch. In a further embodiment, the starch blend comprises 55-65% (w/w) of an unmodified amylose-containing starch and 35-45% (w/w) of a non-chemically inhibited starch. In an even further embodiment, the starch blend comprises about 50% (w/w) of an unmodified amylose-containing starch and about 50% (w/w) of a non-chemically inhibited starch.

Another embodiment is directed to the one or more starch blends described herein, with the proviso that said unmodified amylose-containing starch and said non-chemically inhibited starch are the only two starches in said blend. Yet another embodiment is directed to the one or more starch blends described herein, with the proviso that said unmodified amylose-containing starch and said non-chemically inhibited starch are the only viscosifiers in the blend

One embodiment is directed to a test solution 1 comprising the one or more starch blend described herein, wherein the viscosity of said test solution 1 is stable at eating temperature after one, two, three, four, or five freeze-thaw cycles. Another embodiment is directed to a test solution 2 comprising one or more starch blend described herein, wherein the viscosity level of said solution at a cooling temperature after three, four, or five freeze-thaw cycles is at the same or comparable viscosity level as said solution after one or two freeze-thaw cycles. As used herein, the term "stable" refers to the viscosity of a freshly prepared sample compared to the viscosity after the freeze-cycles, where the viscosity a stable formulation/soution changes by no more than 5%. According to various embodiments, the viscosity of stable solution after a freeze-thaw cycle changes by no more than 5%, no more than 3%, no more than 2%, or no more than 1%. In some embodiments, the viscosity of the stable formulation/solution after the freeze-cycle changes by no more than 1%.

The one or more test solutions 1 or 2 described herein can be prepared by adding one or more starch blend described herein as it is to water at 4% solids and cooking the mixture at 95°C for 20 minutes. In a further embodiment, the one or more test solutions 1 or 2 described herein is subjected to one or more, two or more, three or more, four or more, or five or more freeze-thaw cycles. In a still further embodiment, the freeze-thaw cycle comprises freezing at -18 °C for 16 hours and thawing at 25°C for 8 hours.

The one or more test solution 1 described herein may have a viscosity of at least 20Pa-s, 35Pa-s, or 50Pa-s at 65°C and 0.1 rad/s when evaluated in accordance with the Test 1 methodology set forth in the Examples. In yet another embodiment, the test solution 1 described herein has a viscosity of at least 2Pa-s, 4Pa-s, or 6Pa-s at 65°C and 1 rad/sec when evaluated in accordance with the Test 1 methodology set forth in the Examples. The one or more test solution 1 described herein may have a viscosity of at least 0.75Pa-s or 1.0Pa-s at 65°C and 10 rad/sec when evaluated in accordance with the Test 1 methodology set forth in the Examples. The test solution 2 described herein has a viscosity of at least 0.6Pa-s, 0.8Pa-s,or1.0Pa-s at 90°C and 10rad/sec shear rate when evaluated in accordance with the Test 2 methodology set forth in the Examples. In one embodiment, one or more starch blend described herein will not be significantly hydrolyzed, and, thus, will have substantially the same molecular weight as a blend of the native starches. In another embodiment, the average molecular weight of the one or more starch blends described herein will be at least 80%, at least 85%, at least 90%, or at least 95%, that of the native blend.

The present invention, thus generally described, will be understood more readily by reference to the following examples, which are provided by way of illustration and are not intended to be limiting of the present invention.

### EXAMPLES

The following examples are presented to further illustrate and explain the present invention and should not be taken as limiting in any regard. All percentages used are on a weight/weight basis.

### Example 1

### Assays

### The following assays are standard assays used in the examples described below:

1A. Starch Test Solution (1g batches). The starch ingredients are dry blended and then combined with distilled water in a Vorwerk Thermomix^{®} (Vorwerk UK Limited, Berkshire, UK). The mixture is heated to 90°C and held at 90°C for 25 minutes while mixing in the Thermomix^{®} at speed 2. At the end of 25 minutes, the mixture is promptly dispersed into 118.3 ml plastic jars and cooled in an ice bath below 40°C. The mixture is subsequently subjected to 1 or 3 freeze-thaw cycles. For each freeze-thaw cycle, one or more jar is placed in a non-cycling freezer between -10 and -20°C for 16 hours, and at the end of 16 hours, the jar(s) are removed from the freezer and thawed at approximately 20-25°C for 8 hours.

1B. Viscosity Measurements, Starch blends, and Equipment and Parameters.

Equipment and paramaters: Anton Paar MCR101 Rheometer and attachment CC24 cup/bob (24mm diameter; available from Anton Paar GmbH, Graz, Austria).

Sample preparation (Starch Solution Formulations): Remove a frozen starch solution sample, place in a big cup, and then chop into small pieces. Heat the frozen sample in a 98°C water bath for about 20 minutes until the sample reaches a temperature of 80°C. Load a first sample of the starch solution on the Rheometer and run Test 1 as set forth hereinbelow. Leave the rest of sample on the top of the water bath for about 20 minutes while Test 1 is completed. Load a second sample (about 75°C) of the starch solution on the rheometer and run Test 2 as set forth hereinbelow.

Test 1: Texture Evaluation at Eating Temperature. Pre-set the rheometer to 65°C. Load the first sample of the starch solution on the rheometer and seal with silicon oil. Equilibrate the first sample at 65°C. Measure the viscosity at 0.1, 1 or 10 rad/s at 65°C.

Test 2: Texture Evaluation During Cooling. Pre-set the rheometer at 90°C. Load the second sample of the starch solution on the rheometer and seal with silicon oil. Equilibrate the second sample at 90°C. Measure viscosity at 10/s during cooldown from 90°C to 22°C at a cooldown rate of 3°C/minute and at 22°C for five minutes.

Equipment and test used to measure the viscosity of food products: Sauce samples were heated in a boiling water bath with gentle hand stirring until samples reached 90°C, then viscosity was measured on a Brookfield viscometer at 85°C (DV2T Digital Viscometer, AMETEK Brookfield, Middleboro, MA) with Spindle #3 at 20 RPM for 30 seconds

The following starch ingredients were used throughout the examples:
S1 is a thermally inhibited starch that is a moderately thermally inhibited, waxy corn starch commercially available from Ingredion Incorporated, Bridgewater, NJ, as NOVATION^{®} 2600 starch.
S2 is a native potato starch that is commercially available from Ingredion Incorporated, Bridgewater, NJ, as PENPURE^{®} 10 potato starch.
S3 is a native waxy potato starch that is commercially available from Ingredion Incorporated, Bridgewater, NJ, as PENPURE^{®} 80 potato starch.
S4 is a native corn starch that is commercially available from Ingredion Incorporated, Bridgewater, NJ, as MELOJEL^{®} cornstarch.
S5 is a native waxy corn starch that is commercially available from Ingredion Incorporated, Bridgewater, NJ, as AMIOCA^{™} cornstarch.
S6 is a native regular rice starch that is commercially available from Ingredion Incorporated, Bridgewater, NJ.
S7 is a native waxy rice starch that is commercially available from Ingredion Incorporated, Bridgewater, NJ.
S8 is a tapioca starch that is commercially available from Ingredion Incorporated, Bridgewater, NJ.
S9 is a thermally inhibited tapioca starch that is from a starch commercially available from Ingredion Incorporated, Bridgewater, NJ, as NOVATION^{®} 3600 starch.
S10 is a drum-dried, pre-gelled tapioca flour commercially available from Ingredion Incorporated, Bridgewater, NJ, as HOMECRAFT^{™} Express 390 starch.
S11 is a spray dried, pre-gelled corn starch commercially available from Ingredion Incorporated, Bridgewater, NJ, as ULTRATEX^{™} IMF starch.
S12 is a thermally inhibited waxy corn starch commercially available from Ingredion Incorporated, Bridgewater, NJ, as NOVATION^{™} Prima 600 starch.
S13 is a drum-dried, pre-gelled waxy corn starch commercially available from Ingredion Incorporated, Bridgewater, NJ, as NATIONAL^{™} 298FG starch.
S14 is a spray-dried, pre-gelled waxy corn starch commercially available from Ingredion Incorporated, Bridgewater, NJ, as NOVATION^{™} Indulge 2930 starch.

### Example 2

### Starch Blends and Viscosities

The viscosities of a number of starch solutions were tested using Test 1 or Test 2, and the results of the tests are set forth below in Table 2. The formulations of the starch solutions are set forth below in Table 1, wherein TI is the acronym for "thermally inhibited". "Test Solution 1" as used herein means a starch solution formulation as described hereinbelow in Table 1 that is tested in accordance with Test 1 as set forth hereinabove. "Test Solution 2" as used herein means a starch solution formulation as described hereinbelow in Table 1 that is tested in accordance with Test 2 set forth hereinabove.

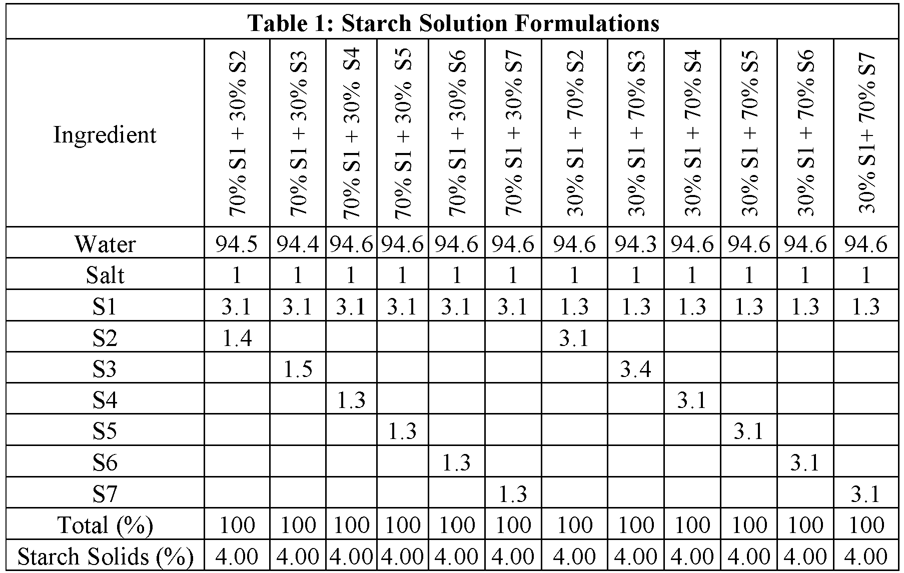

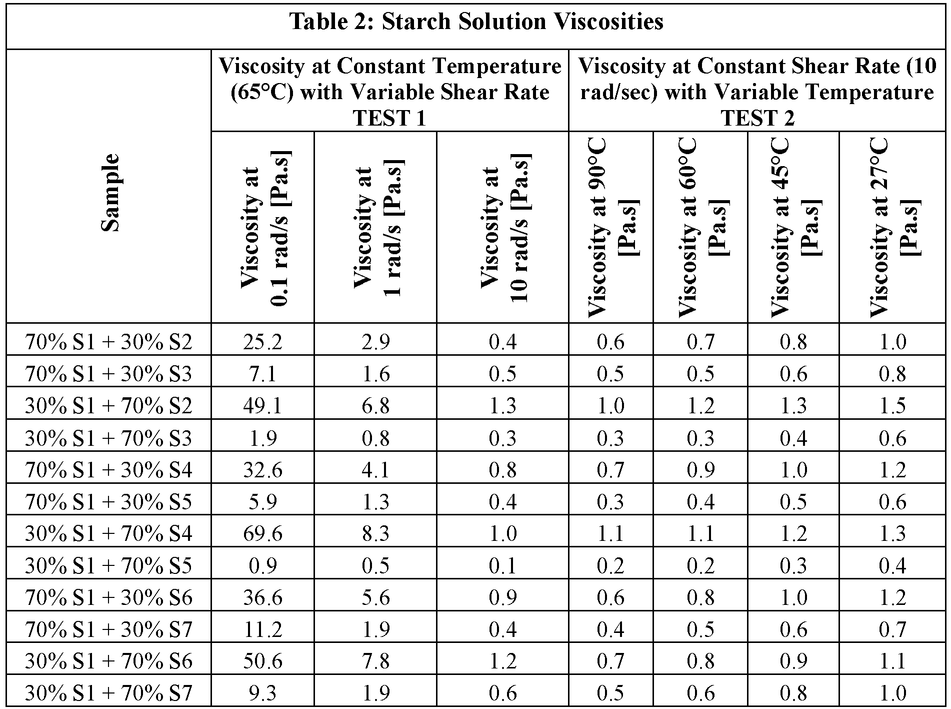

The Test 1 data in Table 2 demonstrates that samples formulated with thermally inhibited starch and native amylose containing starch have a higher viscosity than their counterpart formulations containing native waxy starch over a range of shear rates.

The Test 2 data in Table 2 demonstrates that samples formulated with thermally inhibited starch and native amylose containing starch have a higher viscosity than their counterpart formulations containing native waxy starch over a range of temperatures typical used in heated food applications.

### Example 3

### Use of Starch Blends in Beef Gravy

The viscosities of several beef gravy formulations were measured and the results of these measurements are set forth in Table 3.

| **Table 3: Beef Gravy Formulations (ingredients set forth as wt%)** | | | | | | |
|---|---|---|---|---|---|---|
| **Ingredient** | **Beef Gravy 1** | **Beef Gravy 2** | **Beef Gravy 3** | **Beef Gravy 4** | **Beef Gravy 5** | **Beef Gravy 6** |
| Seasoned Beef Broth | 90.69 | 90.69 | 90.69 | 90.69 | 90.69 | 90.69 |
| S1 | 1.63 | 1.63 | 1.63 | 1.63 | 1.63 | 1.63 |
| S6 | 1.63 | | | | | |
| S7 | | 1.63 | | | | |
| S4 | | | 1.63 | | | |
| S5 | | | | 1.63 | | |
| S2 | | | | | 1.63 | |
| S3 | | | | | | 1.63 |
| Flour | 1.00 | 1.00 | 1.00 | 1.00 | 1.00 | 1.00 |
| Salt | 0.75 | 0.75 | 0.75 | 0.75 | 0.75 | 0.75 |
| Vegetable Shortening | 4.30 | 4.30 | 4.30 | 4.30 | 4.30 | 4.30 |
| Total | 100.00 | 100.00 | 100.00 | 100.00 | 100.00 | 100.00 |

The gravy was prepared by combining the broth and vegetable shortening. The dry ingredients were mixed and then added using a Vorwerk Thermomix^{®} (Vorwerk UK Limited, Berkshire, UK). The mixture was heated to 90°C and held at such temperature for 20 minutes. The Vorwerk Thermomix^{®} (Vorwerk UK Limited, Berkshire, UK) was turned off, and the gravy was filled into jars and cooled to 25°C in an ice bath.

Brookfield viscosity was measured after one and three freeze-thaw ("F/T") cycles for each sample. The results are shown below in Table 4.

| **Table 4: Beef Gravy Viscosities** | | |
|---|---|---|
| **Food Product** | **Brookfield Viscosity (cP)** | |
| | **1 F/T cycle** | **3 F/T cycles** |
| Beef Gravy 1: S1+S6 | 1260 | 1195 |
| Beef Gravy 2: S1+S7 | 1295 | 1043 |
| Beef Gravy 3: S1+S4 | 1653 | 1798 |
| Beef Gravy 4: S1+S5 | 923 | 805 |
| Beef Gravy 5: S1+S2 | 1623 | 1278 |
| Beef Gravy 6: S1+S3 | 805 | 610 |

The data in Table 4 demonstrates that samples formulated with a thermally inhibited starch and a native amylose containing starch are higher in viscosity than their counterpart formulations containing native waxy starch after three freeze-thaw cycles.

### Example 4 (Prophetic)

### Use of Starch Blends in a Tomato Sauce

Several tomato sauce formulations containing one or more starch blends described herein are set forth below in Table 5.

| **Table 5: Tomato sauce formulations (ingredients set forth in wt%)** | | | | |
|---|---|---|---|---|
| **Ingredient** | **Tomato Sauce 1** | **Tomato Sauce 2** | **Tomato Sauce 3** | **Tomato Sauce 4** |
| Water | 62.95 | 62.95 | 62.95 | 62.95 |
| Tomato paste | 30.00 | 30.00 | 30.00 | 30.00 |
| S1 | 1.50 | 1.50 | 1.50 | 1.50 |
| S6 | 1.50 | | | |
| S4 | | 1.50 | | |
| S8 | | | 1.50 | |
| S2 | | | | 1.50 |
| Salt | 1.10 | 1.10 | 1.10 | 1.10 |
| Sugar | 1.00 | 1.00 | 1.00 | 1.00 |
| Herb seasoning blend, dried | 1.45 | 1.45 | 1.45 | 1.45 |
| Soy oil | 0.50 | 0.50 | 0.50 | 0.50 |
| Total | 100.00 | 100.00 | 100.00 | 100.00 |

The tomato sauce is prepared by combining the water, oil, and tomato paste, then mixing until smooth. The starch, herb seasoning blend, salt, and sugar are dry blended and whisked into the water/oil/tomato paste mixture. The mixture is added to the Vorwerk Thermomix^{®} (Vorwerk UK Limited, Berkshire, UK) and heated to 90°C, then held at such temperature for 20 minutes. The Vorwerk Thermomix^{®} (Vorwerk UK Limited, Berkshire, UK) is then turned off, and the tomato sauce is filled into jars and cooled to 25°C in an ice bath.

### Example 5

### Dairy Model System Formulas

A starch blend comprising S9 and S10 improved the stability of the dairy formulation set forth in Table 6 hereinbelow under refrigerated storage condition of approximately 2-7°C.

| **Table 6: Dairy model system formula** | | |
|---|---|---|
| **Ingredients** | **Formula 1 (wt%)** | **Formula 3 (wt%)** |
| Non-fat milk | 95.0 | 94.0 |
| S9 | 5.0 | 5.0 |
| S10 | | 1.0 |

The dairy formulations set forth in Table 6 were prepared by first weighing the starch(es) and then slurrying the starches into the milk. This mixture is then premixed in a Thermomix (TM5-4) for five minutes at room temperature at speed 2. The temperature was then adjusted to 90.6°C and held for 25 minutes. The mixture was subsequently dispensed into jars and stored under refrigeration at approximately 2-7°C.

The samples were visually evaluated over time and the formulation containing the starch blend comprising S9 and S10 exhibited improved stability at both 24 hours and 6 weeks aging. The use of S9 alone resulted in a very firm gel, which on stirring remained very lumpy. The starch blend comprising S9 and S10, however, provided a soft-set product having a smooth texture upon stirring.

### Example 6

### Water Model System Formulas

The same starch combination as in Example 5 was also tested in a simple starch / flour and water system. In starch and water, improved stability was also observed with the addition of a starch blend comprising S9 and S10.

| **Table 7: Water Model System Formula** | | |
|---|---|---|
| **Ingredients** | **Formula 9 (wt%)** | **Formula 10 (wt%)** |
| Water | 95.0 | 94.0 |
| S9 | 5.0 | 5.0 |
| S10 | | 1.0 |

A starch blend comprising S9 and S10 provided a food composition with significantly improved texture - no gelling or syneresis, and no graininess. This starch blend may be used to produce a sauce, gravy or soup that has the appearance and eating quality that consumers desire after being stored under refrigeration (e.g. about 2-7 °C).

### Example 7

### Pudding Application

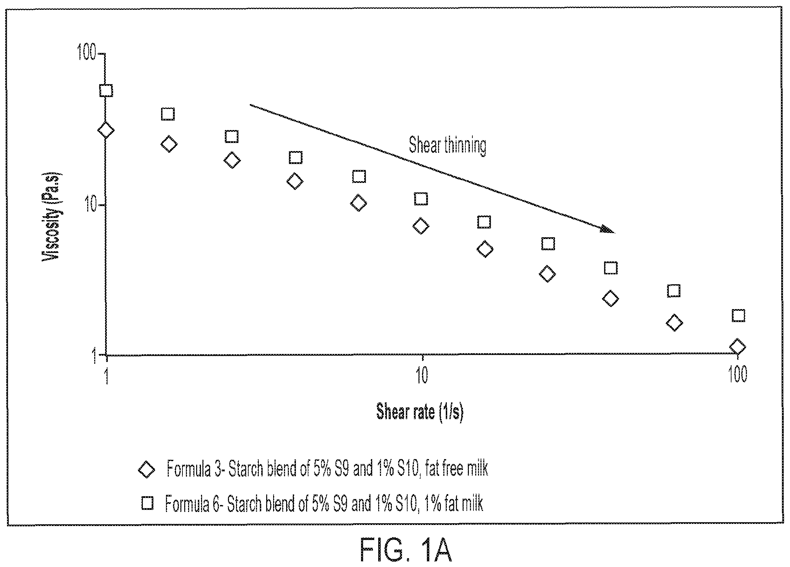

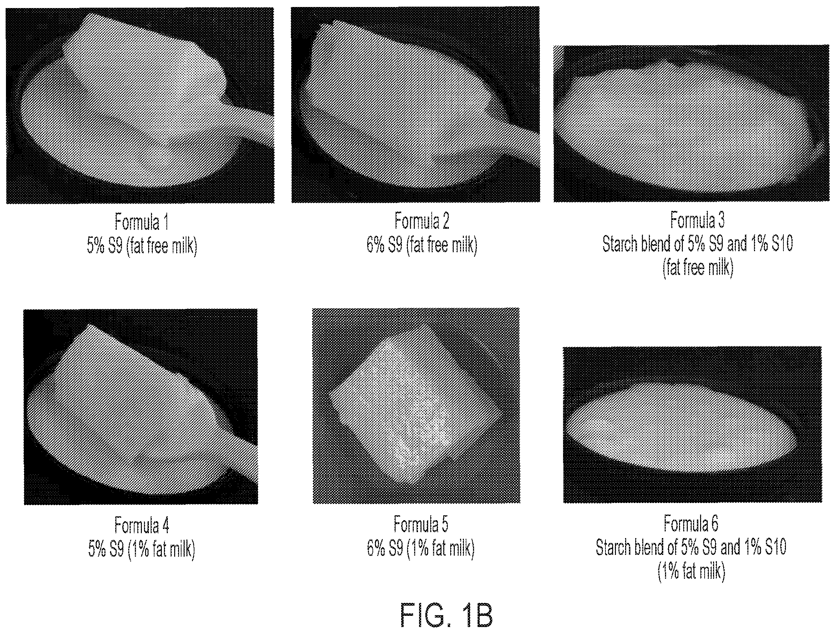

This example illustrates the improvement of pudding stability using a starch blend comprising S9 and S10. As demonstrated in Figure 1B, the pudding made with 5% or 6% S9 formed a gel after being stored under refrigerated conditions for 2 weeks. As further demonstrated in Figure 1B, the pudding made with a starch blend comprising 5% S9 and 1% S10 had a smooth texture after being stored under refrigerated conditions for 2 weeks. This smooth texture was observed in pudding made with fat free milk and 1% fat milk. As demonstrated in Figure 1A, the viscosities of pudding formulations 1-6 set forth hereinbelow in Table 8 were measured and showed shear thinning properties, wherein the viscosity of the pudding formulations decreased as shearing rate increased.

| **Table 8: Pudding formulations (amounts are in wt%)** | | | | | | |
|---|---|---|---|---|---|---|
| **Ingredient** | **Formula 1** | **Formula 2** | **Formula 3** | **Formula 4** | **Formula 5** | **Formula 6** |
| Fat free milk | 95.00 | 94.00 | 94.00 | | | |
| 1% fat milk | | | | 95.00 | 94.00 | 94.00 |
| S9 | 5.00 | 6.00 | 5.00 | 5.00 | 6.00 | 5.00 |
| S10 | | | 1.00 | | | 1.00 |
| Total | 100.00 | 100.00 | 100.00 | 100.00 | 100.00 | 100.00 |

### Example 8 (illustrative)

### Pudding Texture

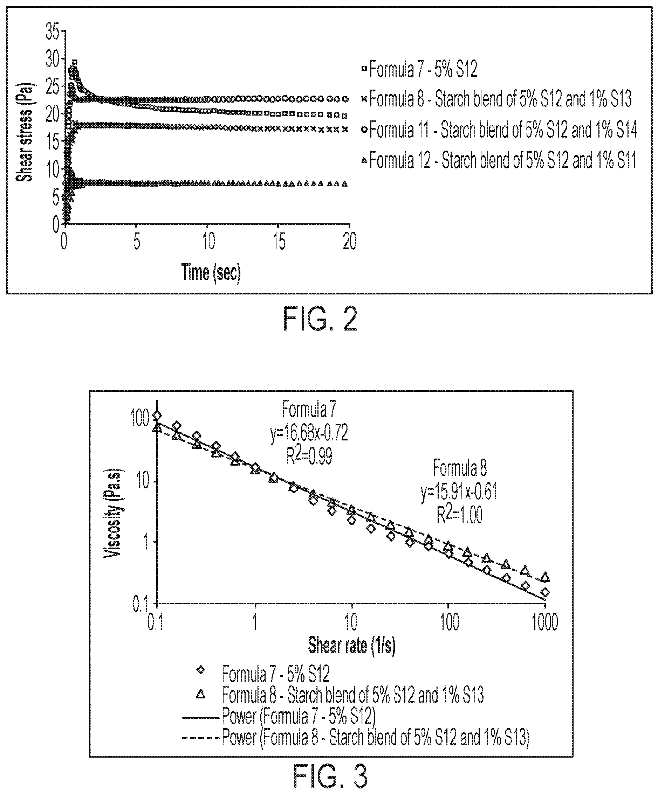

This example demonstrates how a starch blend, specifically a drum-dried waxy corn, with a cook-up starch, specifically thermally inhibited waxy corn, can be used to change rheology properties of a food system. Addition of S13 can reduce yield stress (FIG. 2) and change the flow curve shape of pudding made of 5% S12 by reducing curve slope of viscosity versus shear rate on a log-log scale (FIG. 3).

Power law model (Eq. 1: *σ* = *K*γ*ⁿ* or *η* = *K*γ*ⁿ⁻¹*) was used to describe flowing property of materials, where σ [Pa] is shear stress, *η* [Pa.s] is the apparent viscosity, γ [1/s] is shear rate, K [Pa.s] is the flow consistency index, and *n* is the flow behavior index. For shear thinning material, the flow behavior index is typically a value between 0 and 1, where a higher value indicates less shear thinning. As illustrated in Table 10, addition of S13 led to higher flow behavior index, suggesting less shear thinning.

| **Table 9: Pudding Formulations (amounts are in wt%)** | | |
|---|---|---|
| **Ingredient** | **Formula 7** | **Formula 8** |
| Fat free milk | 95.00 | 94.00 |
| S12 | 5.00 | 5.00 |
| S13 | | 1.00 |
| Total | 100.00 | 100.00 |

| **Table 10: Flow Property of Puddings** | | | |
|---|---|---|---|
| **Formula** | **Starch** | **Flow Consistency Index K [Pa.s]** | **Flow behavior index n** |
| Formula 7 | 5% S12 | 16.7 | 0.28 |
| Formula 8 | 5% S12 + 1% S13 | 15.9 | 0.39 |

### Example 9 (illustrative)

### Food systems

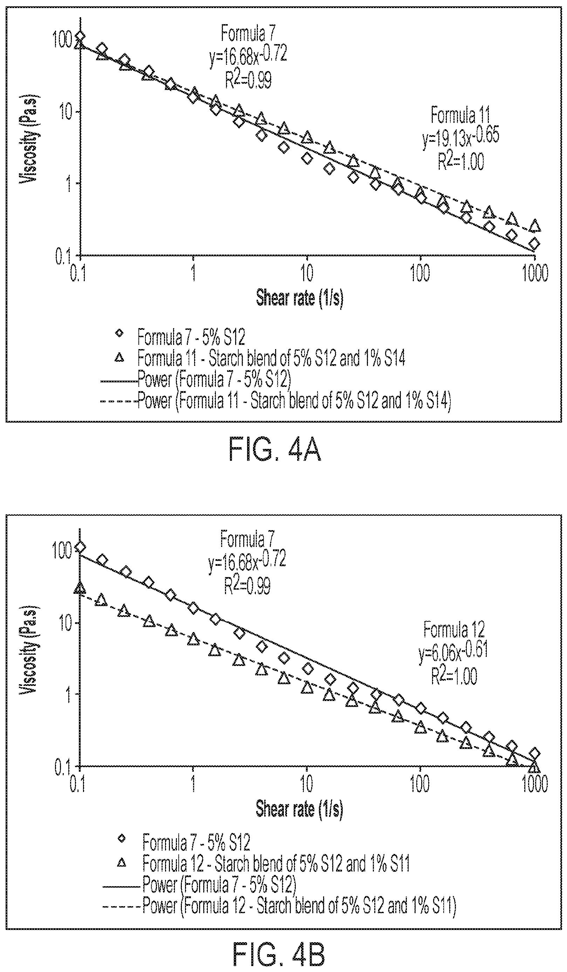

This example demonstrates that the starch blends described herein, specifically a drum-dried waxy corn starch or a spray-dried waxy corn starch, with a cook-up starch, specifically a thermally-inhibited waxy corn, can be used to change the rheology property of food systems. Addition of S14 or S11 has the same effects as S13 and can reduce yield stress (FIG. 2) and change flow curve shapes (FIGs. 4A and 4B) with increasing flow behavior index, n, (Table 12) of pudding made of 5% S12.

| **Table 11: Pudding Formulations (amounts are in wt%)** | | | | |
|---|---|---|---|---|
| **Ingredient** | **Formula 7** | **Formula 8** | **Formula 11** | **Formula 12** |
| Fat free milk | 95.00 | 94.00 | 94.00 | 94.00 |
| S12 | 5.00 | 5.00 | 5.00 | 5.00 |
| S13 | | 1.00 | | |
| S14 | | | 1.00 | |
| S11 | | | | 1.00 |
| Total | 100.00 | 100.00 | 100.00 | 100.00 |

| **Table 12: Flow Properties of the Pudding Formulations from Table 11** | | | |
|---|---|---|---|
| **Formula** | **Starch** | **Flow Consistency Index K [Pa.s]** | **Flow behavior index n** |
| Formula 7 | 5% S12 | 16.7 | 0.28 |
| Formula 11 | 5% S12 + 1% S13 | 19.1 | 0.35 |
| Formula 12 | 5% S12 + 1% S11 | 6.1 | 0.39 |

## Claims

1. A starch blend comprising:
40-85% (w/w) of an unmodified amylose containing starch; and
15-60% (w/w) of a non-chemically inhibited starch,
wherein the unmodified amylose containing starch is a native amylose-containing starch that contains from about 10% to less than 50% amylose by weight of the starch (w/w) and wherein the non-chemically inhibited starch is a thermally inhibited starch.

2. The starch blend according to claim 1 comprising 50-70% (w/w) of the unmodified amylose containing starch, and 30-50% (w/w) of the non-chemically inhibited starch.

3. The starch blend according to claim 1, wherein a test solution 1 comprising said starch blend has a viscosity of at least 2Pa-s, 4Pa-S, or 6Pa-s at 65°C with a 1 rad/sec shear rate when said solution is subjected to one or more, two or more, three or more, four or more, or five or more freeze-thaw cycles, wherein said freeze-thaw cycles comprise freezing at -18 °C for 16 hours and thawing at 25°C for 8 hours.

4. The starch blend according to any preceding claim, wherein a test solution 2 comprising said starch blend has a viscosity of at least 0.6Pa-s, 0.8Pa-s, or 1.0Pa-s at 90°C and 10 rad/sec shear rate when said solution is subjected to one or more, two or more, three or more, four or more, or five or more freeze-thaw cycles, wherein said freeze-thaw cycles comprise freezing at -18 °C for 16 hours and thawing at 25°C for 8 hours.

5. The starch blend according to any preceding claim, wherein the native amylose-containing starch contains at least about 15% to less than 50% amylose, or at least about 20% to less than 50% amylose, all by weight of the starch (w/w).

6. The starch blend according to any preceding claim, wherein the unmodified amylose containing starch is selected from potato, rice, tapioca, and corn.

7. The starch blend according to any preceding claim, wherein the unmodified amylose containing starch is a native amylose-containing potato starch that contains from about 10% to less than 50% amylose, at least about 15% to less than 50% amylose, or at least about 20% to less than 50% amylose, all by weight of the starch (w/w).

8. The starch blend according to any preceding claim, wherein the non-chemically inhibited starch is a low amylose starch or a starch that contains less than 10% amylose, less than about 5%, less than about 2%, or less than about 1% amylose, all by weight of the starch (w/w).

9. The starch blend according to any preceding claim, wherein the non-chemically inhibited starch is selected from waxy corn, waxy tapioca, waxy rice, and waxy potato.

## Patentansprüche

1. Stärkemischung, umfassend:
zu 40-85 % (Gew./Gew.) eine unmodifizierte amylosehaltige Stärke; und
zu 15-60 % (Gew./Gew.) eine nichtchemisch inhibierte Stärke,
wobei die unmodifizierte amylosehaltige Stärke eine native amylosehaltige Stärke ist, die von etwa 10 % bis weniger als 50 % Amylose, bezogen auf das Gewicht der Stärke (Gew./Gew.), enthält, und wobei die nichtchemisch inhibierte Stärke eine thermisch inhibierte Stärke ist.

2. Stärkemischung nach Anspruch 1, umfassend zu 50-70 % (Gew./Gew.) die unmodifizierte amylosehaltige Stärke und zu 30-50 % (Gew./Gew.) die nichtchemisch inhibierte Stärke.

3. Stärkemischung nach Anspruch 1, wobei eine Testlösung 1, umfassend die Stärkemischung, eine Viskosität von mindestens 2 Pa-s, 4 Pa-S oder 6 Pa-s bei 65 °C mit einer Scherrate von 1 rad/sec aufweist, wenn die Lösung einem oder mehreren, zwei oder mehreren, drei oder mehreren, vier oder mehreren oder fünf oder mehreren Gefrier-Tau-Zyklen unterzogen wird, wobei die Gefrier-Tau-Zyklen ein Gefrieren bei -18 °C für 16 Stunden und ein Auftauen bei 25 °C für 8 Stunden umfassen.

4. Stärkemischung nach einem der vorstehenden Ansprüche, wobei eine Testlösung 2, umfassend die Stärkemischung, eine Viskosität von mindestens 0,6 Pa-s, 0,8 Pa-S oder 1,0 Pa-s bei 90 °C mit einer Scherrate von 10 rad/sec aufweist, wenn die Lösung einem oder mehreren, zwei oder mehreren, drei oder mehreren, vier oder mehreren oder fünf oder mehreren Gefrier-Tau-Zyklen unterzogen wird, wobei die Gefrier-Tau-Zyklen das Gefrieren bei -18 °C für 16 Stunden und das Auftauen bei 25 °C für 8 Stunden umfassen.

5. Stärkemischung nach einem der vorstehenden Ansprüche, wobei die native amylosehaltige Stärke zu mindestens etwa 15 % bis weniger als 50 % Amylose oder zu mindestens etwa 20 % bis weniger als 50 % Amylose, jeweils bezogen auf das Gewicht der Stärke (Gew./Gew.), enthält.

6. Stärkemischung nach einem der vorstehenden Ansprüche, wobei die unmodifizierte amylosehaltige Stärke ausgewählt ist aus Kartoffel, Reis, Tapioka und Mais.

7. Stärkemischung nach einem der vorstehenden Ansprüche, wobei die unmodifizierte amylosehaltige Stärke eine native amylosehaltige Kartoffelstärke ist, die von etwa 10 % bis weniger als 50 % Amylose, mindestens etwa 15 % bis weniger als 50 % Amylose oder mindestens etwa 20 % bis weniger als 50 % Amylose, jeweils bezogen auf das Gewicht der Stärke (Gew./Gew.), enthält.

8. Stärkemischung nach einem der vorstehenden Ansprüche, wobei die nichtchemisch inhibierte Stärke eine amylosearme Stärke oder eine Stärke ist, die zu weniger als 10 % Amylose, zu weniger als etwa 5 %, zu weniger als etwa 2 % oder zu weniger als etwa 1 % Amylose, jeweils bezogen auf das Gewicht der Stärke (Gew./Gew.), enthält.

9. Stärkemischung nach einem der vorstehenden Ansprüche, wobei die nichtchemisch inhibierte Stärke ausgewählt ist aus Wachsmais, Wachstapioka, Wachsreis und Wachskartoffel.

## Revendications

1. Mélange d'amidon comprenant :
40-85 % (p/p) d'un amidon contenant de l'amylose non modifiée ; et
15-60 % (p/p) d'un amidon non inhibé chimiquement,
dans lequel l'amidon contenant de l'amylose non modifiée est un amidon contenant de l'amylose native qui contient d'environ 10 % à moins de 50 % d'amylose en poids de l'amidon (p/p) et dans lequel l'amidon non inhibé chimiquement est un amidon inhibé thermiquement.

2. Mélange d'amidon selon la revendication 1 comprenant 50-70 % (p/p) de l'amidon contenant de l'amylose non modifiée, et 30-50 % (p/p) de l'amidon non inhibé chimiquement.

3. Mélange d'amidon selon la revendication 1, dans lequel une solution d'essai 1 comprenant ledit mélange d'amidon a une viscosité d'au moins 2 Pa-s, 4 Pa-S ou 6 Pa-s à 65 °C avec un taux de cisaillement de 1 rad/s lorsque ladite solution est soumise à un ou plusieurs, deux ou plusieurs, trois ou plusieurs, quatre ou plusieurs, ou cinq ou plusieurs cycles de congélation-décongélation, dans lequel lesdits cycles de congélation-décongélation comprennent une congélation à -18 °C pendant 16 heures et une décongélation à 25 °C pendant 8 heures.

4. Mélange d'amidon selon l'une quelconque revendication précédente, dans lequel une solution d'essai 2 comprenant ledit mélange d'amidon a une viscosité d'au moins 0,6 Pa-s, 0,8 Pa-s ou 1,0 Pa-s à 90 °C et à un taux de cisaillement de 10 rad/s lorsque ladite solution est soumise à un ou plusieurs, deux ou plusieurs, trois ou plusieurs, quatre ou plusieurs, ou cinq ou plusieurs cycles de gel-dégel, dans lequel lesdits cycles de gel-dégel comprennent une congélation à -18 °C pendant 16 heures et une décongélation à 25 °C pendant 8 heures.

5. Mélange d'amidon selon l'une quelconque revendication précédente, dans lequel l'amidon contenant de l'amylose native contient au moins environ 15 % à moins de 50 % d'amylose, ou au moins environ 20 % à moins de 50 % d'amylose, le tout en poids de l'amidon (p/p).

6. Mélange d'amidon selon l'une quelconque revendication précédente, dans lequel l'amidon contenant de l'amylose non modifiée est choisi parmi la pomme de terre, le riz, le tapioca et le maïs.

7. Mélange d'amidon selon l'une quelconque revendication précédente, dans lequel l'amidon contenant de l'amylose non modifiée est un amidon de pomme de terre contenant de l'amylose native qui contient d'environ 10 % à moins de 50 % d'amylose, d'au moins environ 15 % à moins de 50 % d'amylose, ou d'au moins environ 20 % à moins de 50 % d'amylose, le tout en poids de l'amidon (p/p).

8. Mélange d'amidon selon l'une quelconque revendication précédente, dans lequel l'amidon non inhibé chimiquement est un amidon à faible teneur en amylose ou un amidon qui contient moins de 10 % d'amylose, moins d'environ 5 %, moins d'environ 2 %, ou moins d'environ 1 % d'amylose, le tout en poids de l'amidon (p/p).

9. Mélange d'amidon selon l'une quelconque revendication précédente, dans lequel l'amidon non inhibé chimiquement est choisi parmi le maïs cireux, le tapioca cireux, le riz cireux et la pomme de terre cireuse.
